# EUROPEAN PATENT SPECIFICATION

(11) **EP 1 509 637 B1**
(45) Date of publication and mention of the grant of the patent: **06.03.2013**
(21) Application number: 03725959.5
(22) Date of filing: 21.05.2003
(51) Int. Cl.: C23F 13/06, C23F 13/18, C23F 13/16, F16L 58/00

(54) **A PROTECTING DEVICE FOR METAL STRUCTURES**
SCHUTZVORRICHTUNG FÜR METALLKONSTRUKTIONEN
DISPOSITIF DE PROTECTION DE STRUCTURES METALLIQUES

(30) Priority: 03.06.2002 SE 0201665
(43) Date of publication of application: 02.03.2005
(73) Proprietor: AFFARSVERKET SVENSKA KRAFTNAT, 162 15 Vallingby (SE)
(72) Inventor: SANDBERG, Bertil, S-183 60 TÄBY (SE); FORSSANDER, Märit, S-722 40 VÄSTER S (SE)
(74) Representative: Persson, Albin
(86) International application number: PCT/SE2003/000800
(87) International publication number: WO 2003/102268

(56) References cited:
- GB-A- 1 603 628
- GB-A- 2 050 427
- US-A- 3 616 422
- FORSSANDER MARIT: 'Korrosion pa det svenska kraftledningsnatet' NORDISK KORROSION, AKTUELLT FRAN KORROSIONSINSTITUTET no. 2, 1999, pages 5 - 7, XP002967998

## Description

### TECHNICAL FIELD OF THE INVENTION

The invention relates to a protecting device for metal structures, comprising at least one sacrificial anode of a less precious metal than the metal structure and a fastener connecting the sacrificial anode and the metal structure electrically.

When two metals are conductively interconnected and simultaneously exposed to moisture a corrosion cell is formed having a negative pole and a positive pole. At the negative pole oxidation always takes place and at the positive pole reduction takes place. The metal forming the negative pole is dissolved gradually. A sacrificial anode protects metal objects against corrosion by operating as a negative pole. Generally zinc or magnesium, which are metals less precious than steel, is used as material for a sacrificial anode to protect steel. Sacrificial anodes are used when metal structures are exposed to a damp and corrosive environment. Hulls of boats, water heaters and water cisterns are examples of metal structures usually protected by means of sacrificial anodes.

### STATE OF THE ART

Sacrificial anodes for hulls of boats can have different shapes and dimensions. In US3772179 is disclosed a sacrificial anode electrically connected to the hull of the boat through a clamping device. A point of the clamping device is maintained in contact with the hull through a permanent magnet.

Other types of sacrificial anodes used in similar situations are fastened directly against the hull or the metal structure to be protected. Sacrificial anodes electrically connected to the metal structure through a cable are also known. The cable can be fastened to the metal structure by a cable clip or similar, which is fastened by screwing.

Also pylons and similar structures are exposed to corrosion in a damp environment. Existing sacrificial anodes are regarded as less suitable and labour-intensive to mount in this type of applications. Also useful life and long-term effect are regarded as unsatisfying. Consequently, there is a need for sacrificial anodes having a better function for a longer period of time.

### SUMMARY OF THE INVENTION

Hence, one object of the invention is to provide a protecting device, which by means of sacrificial anodes results in a satisfactory long-term effect for protection of pylons and similar metal structures. Further one object is to provide a protecting device that is easy to mount.

These objects are obtained due to that the protecting device comprises two electrically conducting fasteners supporting the sacrificial anodes. The fasteners are arranged to engage an inner side and an outer side, respectively, of the metal structure. The fasteners being in contact with the metal structure ensures an electrically conducting connection between the sacrificial anode and the metal structure while expending the sacrificial anode. The fasteners are arranged so that they can be tightened towards each other with the metal structure between them. Consequently the metal structure does not have to be subject to any measures to ensure a favourable electric connection between the metal structure and the fasteners.

The sacrificial anode can be formed as a bar having a suitable volume to obtain the desired life. In longer embodiments of the sacrificial anode it is suitable that the accompanying fasteners are divided into two parts, supporting the sacrificial anode in its ends. As a consequence thereof the protecting device ensures a resistant and rigid attachment to the metal structure.

According to the invention a first fastener of the protecting device is arranged in a V-shape having perpendicular stems. Each of the stems supports a bar-shaped sacrificial anode arranged perpendicular to the stems, respectively. A second fastener of the protecting device is arranged in a U-shape having stems arranged in an obtuse angle. According to this embodiment a base portion connecting the stems supports a bar-shaped sacrificial anode. In this embodiment the fasteners are arranged with such dimensions so that they extend outside a pylon having a V-shaped cross section with perpendicular stems. The portions of the fasteners extending outside the pylon are provided with a set of aligned apertures. Bolts arranged through the apertures can be used to press the fasteners towards each other and into contact with the pylon.

The protecting device according to the invention can also be used for metal bracings and similar, which are used in connection with pylons and similar structures. The metal bracings are used to fasten the pylon and extend between the pylon and a fastening device below ground level.

The sacrificial anode can consist of magnesium or any other metal having similar electrochemical properties. The fasteners can be formed in galvanized flat bar steel, which are partially moulded into the sacrificial anode.

### BRIEF DESCRIPTION OF THE DRAWINGS

The invention will now be described in more detail by means of embodiment examples and with reference to the accompanying drawings, in which
- Fig. 1: is a schematic cross section view of a first fastener with accompanying sacrificial anodes according to one embodiment of the invention,
- Fig. 2: is a schematic side view of the fastener of Fig. 1,
- Fig. 3: is a schematic cross section view of a second fastener with accompanying sacrificial anode according to the invention,
- Fig. 4: is a schematic side view of the fastener of Fig. 3,
- Fig. 5: is a schematic cross section view of a pylon having a first fastener and a second fastener mounted thereon,
- Fig. 6: is a schematic side view of two sets of fasteners mounted on two pylons as illustrated in Fig. 5,
- Fig. 7: is a schematic cross section view of a second type of pylon having a first fastener and a second fastener mounted thereon,
- Fig. 8: is a schematic side view of a protecting device mounted on the pylon of Fig. 7 and
- Fig. 9: is a schematic cross section view of a bracing for a pylon having a first fastener and a second fastener mounted thereon.

### DESCRIPTION

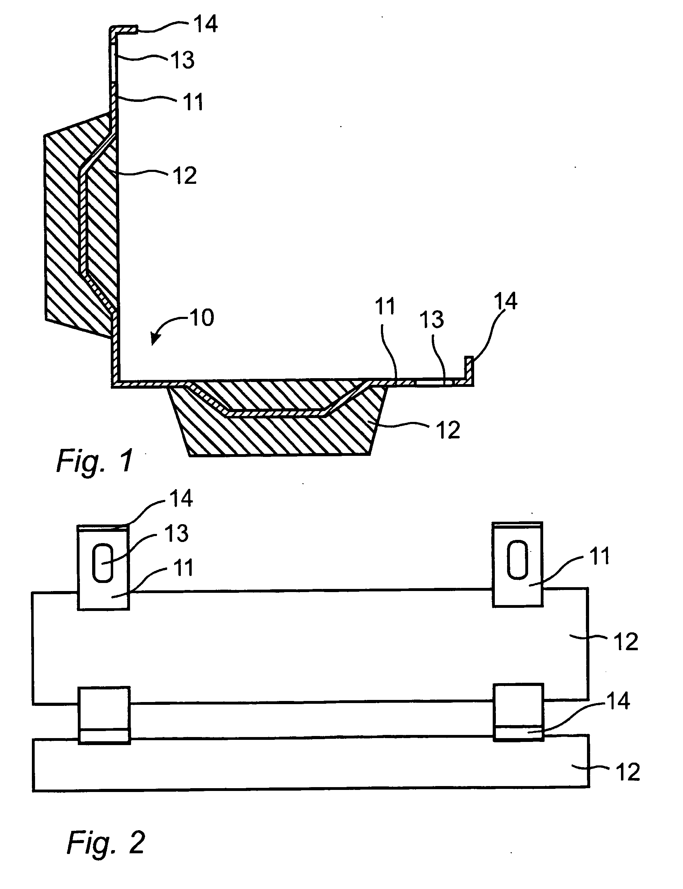

Fig. 1 illustrates one embodiment of a protecting device according to the invention, comprising a first fastener 10. The first fastener 10 is formed in V-shape by metal plates and has two perpendicular and similar stems 11. Each stem 11 supports an elongated and bar-shaped first sacrificial anode 12 in a central portion. In the embodiment shown the central portion is bent to a U-shape so that one part of the first sacrificial anode 12 is positioned within this portion. However, a major part of the sacrificial anode is positioned outside said portion. The cross section of the bar-shaped sacrificial anode has the shape of an equally sided trapezium. In the embodiment shown the first sacrificial anode 12 thus comprise two similar bar-shaped bodies.

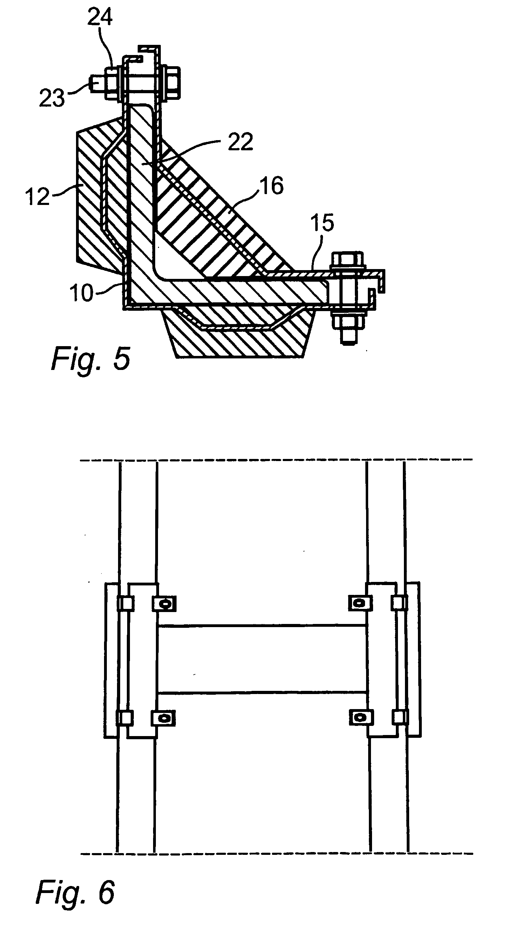

The stem 11 has a length that is somewhat larger than a width of the first sacrificial anode. A through first aperture 13 is arranged in a portion of the fastener 10 projecting outside the sacrificial anode. This aperture is used to fasten the protecting device to a metal structure (see Fig. 5). The projecting portion is terminated by a flange 14 that is bent inwards in a right angle.

By Fig. 2 it is evident that the sacrificial anodes are elongated. It is also evident that the first fastener 10 comprises two similar parts, which are moulded together with the elongated and bar-shaped sacrificial anodes 12 at the ends of the sacrificial anodes. The apertures 13 are somewhat oval to facilitate fitting and mounting of two interacting fasteners with sacrificial anodes.

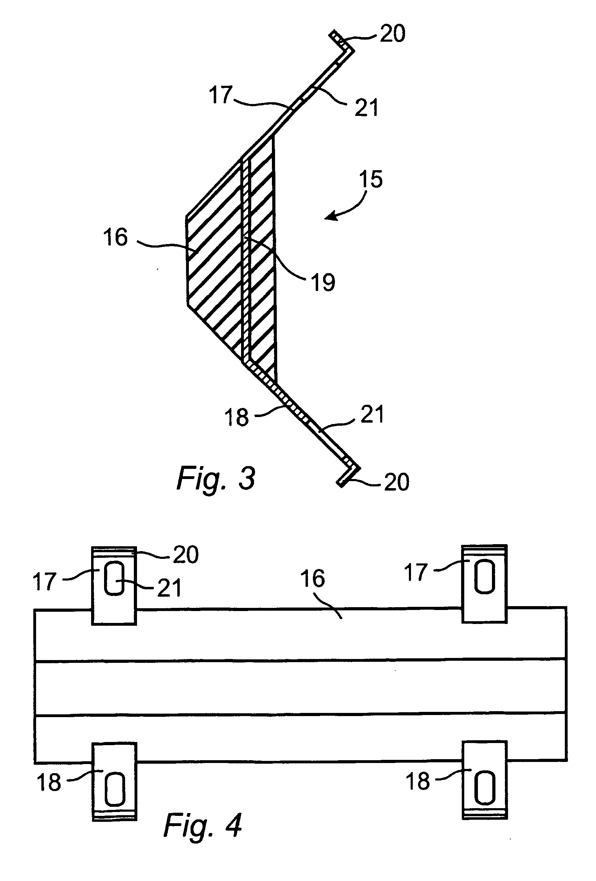

Fig. 3 illustrates a second fastener 15 and a second elongated sacrificial anode 16. For some applications the second sacrificial anode 16 and, alternatively, the first sacrificial anode 12 can be excluded, so that the protecting device only comprises one sacrificial anode. In the embodiment shown the second fastener 15 and the second sacrificial anode 16 interact with the first fastener 10 and the first sacrificial anode 12 forming a protecting device according to the invention. In the embodiment of Fig. 1-4 the protecting device is adapted for a metal structure in the form of a pylon designed as a profile having an L-shaped cross section.

Hence, the second fastener 15 comprises a first leg 17 and a second leg 18 arranged perpendicular to the first leg 17. The first leg 17 and the second leg 18 are connected to a base portion 19 in one end. The free ends of the legs are bent outwards, forming outwardly bent flanges 20.

The second sacrificial anode 16 is fastened around the base portion by moulding, so that one part thereof extends on the outside of the base portion and one part extends on the inside of the base portion. For fastening to the metal structure and to the first fastener 10 second apertures 21 are arranged in the first leg 17 and the second leg 18 close to the outwardly bent flanges 20.

The design of the second fastener 15, as well as the position of the fastener in the second sacrificial anode 16, is evident by Fig. 4. As in connection with the first sacrificial anode 12 the fastener is divided into two similar parts, which are moulded together with the elongated bar-shaped sacrificial anode 16 in the ends of the sacrificial anodes. The second apertures 21 are oval to facilitate fitting and mounting.

Fig. 5 illustrates one example of an assemblage of a protecting device according to the embodiment of Fig. 1-4 on a metal structure in the form of a pylon 22. The pylon 22 is formed as an L-shaped profile having perpendicular stems. The first fastener 10 with the first elongated sacrificial anode 12 is arranged on the outside of the pylon and the second fastener 15 with the second elongated sacrificial anode 16 is arranged on the inside of the pylon.

Both the first fastener 10 and the second fastener 15 is provided with such dimensions that they extend outside the pylon a distance sufficient for the first apertures 13 and the second apertures to be found outside the pylon after mounting of the fasteners on the pylon. Consequently, the apertures can be fastened by bolts 23 and screwed together by nuts 24. The bolts 23 and the nuts 24 together with the apertures 13; 21 form fastening means holding the fasteners in contact with the metal structure. Other types of fastening means can also be used within the scope of the invention. For example, clamps and snap locks can be used.

The assemblage of the fasteners and the sacrificial anodes on the metal structure can be varied according to different conditions. Consideration should be taken to corrosion damages that possibly already has occurred, occurrence of cross bars and similar on the metal structure and the surrounding environment. Particularly, occurrence of damp or wet environments should be considered.

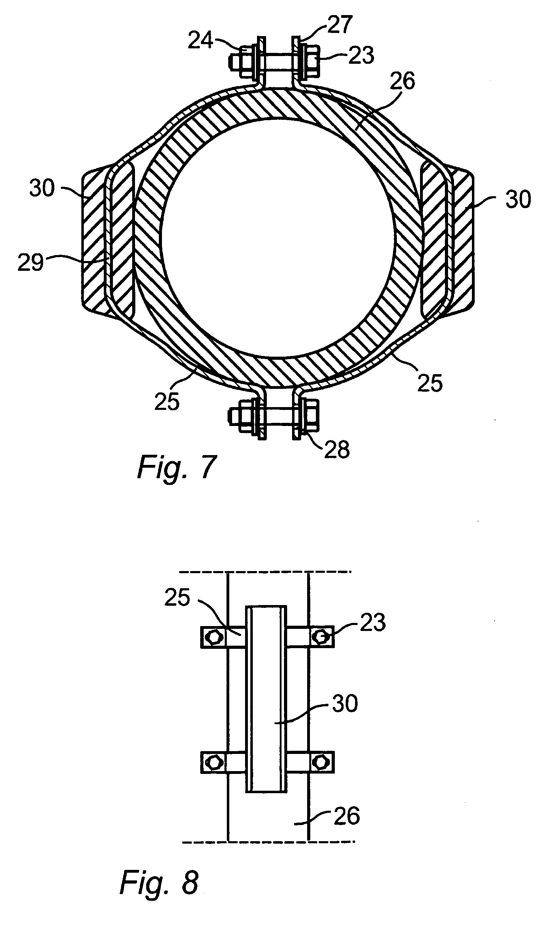

The shape of the fasteners is adapted to the shape of the metal structure, so that the fasteners engage the metal structure and are in a favourable electric contact with the metal structure. Hence, the electric contact is maintained also after partial or complete consumption of the sacrificial anode. Fig. 7 and Fig. 8 illustrate an embodiment that is adapted to a circular metal structure, which can be formed by a pylon for power transmission or lighting.

Fig. 7 is a cross section view of two substantially semicircular fasteners 25 mounted around a round pylon 26. Circular portions of the fasteners are arranged with a diameter similar to the diameter of the pylon and engage said pylon and are arranged in a favourable electric contact with said pylon. The end portions of the fasteners 25 are bent outwards, forming radial projecting flanges 27. Oval apertures 28 are arranged in the flanges. Bolts are brought through the apertures as described above.

An outwardly bent portion 29 is arranged centrally on the semicircular fastener 25, which portion is enclosed by and supports a sacrificial anode 30. Suitably this sacrificial anode is also elongated and bar-shaped, as illustrated in Fig. 8. Also in this embodiment two sets of fasteners can be used for each sacrificial anode. It may be sufficient if only one of the semicircular fasteners 25 supports a sacrificial anode. In similarity with the embodiment described above it is important to obtain a favourable electric contact when mounting the protecting device and then to maintain said contact during the life of the protecting device.

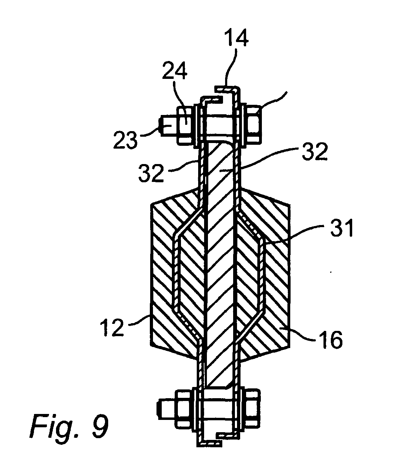

Fig. 9 is a cross section view of two substantially planar fasteners 31, which are mounted on two opposite sides of a flat bar steel 32. The flat bar steel 32 can be used as a bracing for pylons and similar structures. Each fastener 31 supports an elongated sacrificial anode 12; 16 of the type described above in a central and U-shaped portion. The flat bar steel 32 is arranged with a length that exceeds the width of the flat bar steel. During assemblage the fasteners 31 are arranged projecting outside the flat bar steel 32. Apertures are arranged in the portions of the fasteners that are projecting outside the flat bar steel 32. Bolts 23, which are brought through the apertures, are used to press the fasteners against each other and into contact with the flat bar steel. By the tension between the fasteners and the flat bar steel that can be provided by the bolts 23 and the accompanying nuts 24, a favourable electric contact is ensured during the life of the sacrificial anodes 12; 16.

The embodiment of Figures 7 to 9 are not part of the invention.

## Claims

1. A protecting device for a metal structure (22; 26; 32), comprising at least one sacrificial anode (12; 16; 30) of a less precious metal than the metal structure and a fastener (10; 15) connecting the sacrificial anode and the metal structure electrically, ***characterised* in**
| | |
|---|---|
| that | a first fastener (10) is V-shaped to engage an outer side of an L-shaped metal structure (22), |
| that | a second fastener (15) is U-shaped having a base portion (19) and legs (17; 18) projecting from the base to engage an inner side of the L-shaped metal structure (22), |
| that | at least one fastener supports a first sacrificial anode (12), |
| that | the first fastener and the second fastener have a free portion extending outside the metal structure, |
| that | the first fastener and the second fastener are connected to each other in the free portion and are pressed against each other and against the metal structure positioned between the fasteners. |

2. A protecting device according to claim 1, wherein the second fastener supports a second sacrificial anode (12; 16).

3. A protecting device according to claim 1, wherein the fastener (10) comprises two segments arranged in opposite ends of the sacrificial anode.

4. A protecting device according to claim 3, wherein the second fastener (15) supports a second sacrificial anode (16) in the base portion (19).

5. A protecting device according to claim 1, wherein the fastener (10) is partially moulded into the sacrificial anode (12).

6. A protecting device according to claim 1, wherein the fastener (10; 156) is made of galvanized flat bar steel and the sacrificial anode (12; 16) is formed in magnesium.

## Patentansprüche

1. Schutzvorrichtung für eine Metallkonstruktion (22; 26; 32), umfassend mindestens eine Opferanode (12; 16; 30) aus einem weniger edlen Metall als die Metallkonstruktion und ein Verbindungselement (10; 15), das die Opferanode und die Metallkonstruktion elektrisch verbindet, **dadurch gekennzeichnet,**
| | |
|---|---|
| dass | ein erstes Verbindungselement (10) V-förmig ist, um eine Außenseite einer L-förmigen Metallkonstruktion (22) zu berühren, |
| dass | ein zweites Verbindungselement (15) U-förmig ist und einen Grundflächenabschnitt (19) und Schenkel (17; 18) aufweist, die aus der Grundfläche ragen, um eine Innenseite der L-förmigen Metallkonstruktion (22) zu berühren, |
| dass | mindestens ein Verbindungselement eine erste Opferanode (12) hält, |
| dass | das erste Verbindungselement und das zweite Verbindungselement einen freien Abschnitt aufweisen, der außerhalb der Metallkonstruktion verläuft, |
| dass | das erste Verbindungselement und das zweite Verbindungselement in dem freien Abschnitt miteinander verbunden sind und aneinandergedrückt und an die Metallkonstruktion gedrückt sind, die zwischen den Verbindungselementen platziert ist. |

2. Schutzvorrichtung nach Anspruch 1, wobei das zweite Verbindungselement eine zweite Opferanode (12; 16) hält.

3. Schutzvorrichtung nach Anspruch 1, wobei das Verbindungselement (10) zwei Abschnitte umfasst, die an gegenüberliegenden Enden der Opferanode angeordnet sind.

4. Schutzvorrichtung nach Anspruch 3, wobei das zweite Verbindungselement (15) eine zweite Opferanode (16) in dem Grundflächenabschnitt (19) hält.

5. Schutzvorrichtung nach Anspruch 1, wobei das Verbindungselement (10) teilweise in die Opferanode (12) geformt ist.

6. Schutzvorrichtung nach Anspruch 1, wobei das Verbindungselement (10; 156) aus verzinktem Flachstahl hergestellt ist und die Opferanode (12; 16) in Magnesium ausgebildet ist.

## Revendications

1. Dispositif de protection pour une structure métallique (22 ; 26 ; 32), comprenant au moins une anode sacrificielle (12 ; 16 ; 30) en un métal moins précieux que la structure métallique et une fixation (10 ; 15) connectant électriquement l'anode sacrificielle et la structure métallique, **caractérisé en ce**
**qu'**une première fixation (10) est en forme de V pour venir en prise avec un côté extérieur d'une structure métallique (22) en forme de L,
**qu'**une seconde fixation (15) est en forme de U présentant une partie de base (19) et des branches (17 ; 18) faisant saillie de la base pour venir en prise avec un côté intérieur de la structure métallique (22) en forme de L,
**qu'**au moins une fixation maintient une première anode sacrificielle (12),
**que** la première fixation et la seconde fixation présentent une partie libre s'étendant à l'extérieur de la structure métallique,
**que** la première fixation et la seconde fixation sont connectées l'une à l'autre dans la partie libre et sont pressées l'une contre l'autre et contre la structure métallique positionnée entre les deux fixations.

2. Dispositif de protection selon la revendication 1, dans lequel la seconde fixation maintient une seconde anode sacrificielle (12 ; 16).

3. Dispositif de protection selon la revendication 1, dans lequel la fixation (10) comprend deux segments disposés à des extrémités opposées de l'anode sacrificielle.

4. Dispositif de protection selon la revendication 3, dans lequel la seconde fixation (15) maintient une seconde anode sacrificielle (16) dans la partie de base (19).

5. Dispositif de protection selon la revendication 1, dans lequel la fixation (10) est moulée partiellement dans l'anode sacrificielle (12).

6. Dispositif de protection selon la revendication 1, dans lequel la fixation (10 ; 156) est fabriquée en acier plat galvanisé et l'anode sacrificielle (12 ; 16) est formée en magnésium.
